# EUROPÄISCHE PATENTSCHRIFT

(11) **EP 1 419 080 B1**
(45) Veröffentlichungstag und Bekanntmachung des Hinweises auf die Patenterteilung: **30.03.2005**
(21) Anmeldenummer: 02748745.3
(22) Anmeldetag: 07.06.2002
(51) Int. Cl.: B62D 1/19

(54) **SICHERHEITSLENKSÄULE FÜR EIN KRAFTFAHRZEUG**
SAFETY STEERING COLUMN FOR A MOTOR VEHICLE
COLONNE DE DIRECTION DE SECURITE POUR AUTOMOBILE

(30) Priorität: 22.08.2001 DE 10141078
(43) Veröffentlichungstag der Anmeldung: 19.05.2004
(73) Patentinhaber: DaimlerChrysler AG, 70567 Stuttgart (DE)
(72) Erfinder: BORN, Christian, 22589 Hamburg (DE); SENKPIEL, Florian, 27419 Sittensen (DE)
(86) Internationale Anmeldenummer: PCT/EP2002/006252
(87) Internationale Veröffentlichungsnummer: WO 2003/018385

(56) Entgegenhaltungen:
- WO-A-01/03991
- WO-A-98/58831

## Beschreibung

Die Erfindung betrifft eine Sicherheitslenksäule für ein Kraftfahrzeug gemäß dem Oberbegriff des Patentanspruchs 1.

Die DE 196 24 218 A1 zeigt eine Sicherheitslenksäule mit einem konzentrisch zu einer Lenkspindel angeordneten, an der Fahrzeugkarosserie befestigten Mantelrohr, dass bei einer axialen Stoßeinwirkung unter Energieaufnahme verkürzbar ist. Dabei wirkt das Mantelrohr mit mindestens einem Energieabsorptionselement zusammen, welches in diesem Fall als Wellrohr ausgebildet ist.

In der WO 98/58831 wird eine Sicherheitslenksäule mit zugehöriger Energieabsorptionseinrichtung beschrieben, wobei die Energieabsorptionseinrichtung in Form eines Zerspanelementes ausgeführt ist. Dabei ist eine Halterung des Mantelrohrs verschiebbar an einem karosseriefesten Halter gelagert. Des weiteren ist auf diesem Halter ein rohrförmiger Körper mit Nuten unterschiedlicher Tiefe sowie eine Schneideeinrichtung vorgesehen. Bei einer Verschiebung der Halterung relativ zum Halter wird die Schneideeinrichtung über ein Zugelement unter Verrichtung von Schneidarbeit in eine Nut des rohrförmigen Körpers gezogen und absorbiert so die Aufprallenergie eines Insassen. Durch gezielte Auswahl einer Nut mit entsprechender Tiefe wird das Absorptionsvermögen der Einrichtung angepasst.

Die WO 01/03991 zeigt eine gattungsgemäße Sicherheitslenksäule, bei der Zerspanelemente vorgesehen sind, die je nach Lastfall aktiviert werden und die ebenfalls durch Verrichtung von Schneidarbeit Energie absorbieren.

Vor diesem Hintergrund liegt der Erfindung die Aufgabe zugrunde, eine Sicherheitslenksäule zu schaffen, die eine optimierte Möglichkeit zur Energieaufnahme beim Zusammenschieben der Sicherheitslenksäule bei axialer Stoßeinwirkung aufzeigt.

Erfindungsgemäß wird als Energieabsorptionselement zwischen der fahrzeugfesten Lagerung des Mantelrohrs und dem Mantelrohr selbst ein oder mehrere Zerspanelemente eingesetzt. Die Zerspanelemente bewirken im Gegensatz zum Stand der Technik eine Energieabsorption nicht durch Überwindung von Einpresskräften, sondern durch Umformarbeit beim Spanabheben. Wenn bei einem Frontalaufprall auf die Sicherheitslenksäule eine axiale Kraft einwirkt, wird diese in axialer Richtung durch die Relativbewegung des Mantelrohrs gegenüber seiner fahrzeugfesten Lagerung zusammengeschoben. Durch diese Relativbewegung bearbeiten die Zerspanelemente korrespondierend zu ihnen angeordnetes Material, so dass somit beim Zusammenschieben der Sicherheitslenksäule Energie abgebaut wird. Die Zerspanelemente können individuell -wie beim Stand der Technik auch- bei der Montage an die Gegebenheiten der jeweiligen Sicherheitslenksäule angepasst werden, beispielsweise durch Auswahl der Größe der Zerspanelemente oder deren Anordnung bezüglich des zu bearbeitenden Spanungsquerschnitts, so dass die Sicherheitslenksäule optimal ausgelegt werden kann.

Besonders vorteilhaft ist es, die Zerspanelemente so am Mantelrohr oder an der fahrzeugfesten Lagerung zu befestigen, dass eine Anpassung der Energieaufnahme während der Fahrt in Abhängigkeit der aktuellen Fahr- und/oder Fahrerparameter möglich ist. So kann zum Beispiel über eine geeignete Sensorik das Gewicht des Fahrers ermittelt und die Zerspanelemente so eingestellt werden, dass bei schweren Fahrern ein größerer Spanungsquerschnitt bearbeitet, also auch mehr Energie absorbiert wird. Zudem kann die ohnehin bekannte Geschwindigkeit des Fahrzeugs für die Regelung der Energieabsorption genutzt werden. Es ist auch denkbar, die Steuerung von anderen Parametern, die die Situation des Fahrers und des Fahrzeugs kennzeichnen, wie zum Beispiel welche Sitzposition der Fahrer einnimmt, ob er angeschnallt ist, welchen Abstand er zum Lenkrad hat oder welche Relativgeschwindigkeit das Fahrzeug gegenüber einem Hindernis hat, usw., abhängig zu gestalten.

In einer Ausführungsform kann nach Anspruch 3 die Einstellung der durch die Zerspanelemente bearbeitete Spanungsquerschnitt über die Regelung des Spanungsbreite erfolgen. Selbstverständlich kann der Spanungsquerschnitt auch über die der Spanungstiefe verändert werden, indem zum Beispiel die Neigung der Zerspanelemente bezüglich des zu zerspanenden Materials verstellbar gehalten wird.

Um die Spanungsbreite einzustellen, können zwei Zerspanelemente spiegelsymmetrisch jeweils an den Außenseiten des Mantelrohrs angeordnet sein, die über geeignete Antriebsmittel quer zur axialen Erstreckung des Mantelrohrs verschiebbar gelagert sind.

Um die Verschiebung zu ermöglichen, können Schneidplatten als Zerspanelemente vorgesehen sein, die jeweils an einem Führungsklotz befestigt sind. Die Schneidplatten sollten so an dem Führungsklotz befestigt sein, dass diese bei Einwirken der axialen Stoßkraft nicht an dem zu bearbeitenden Material verkanten.

Die Führungsklötze können in einer quer zur axialen Erstreckung des Mantelrohrs verlaufenden Nut geführt sein, womit eine einfache und kostengünstige Möglichkeit geschaffen ist, die Spanungsbreite einzustellen. Sofern der Spanungsquerschnitt über die Spanungstiefe geregelt werden soll, muss eine andere Ausrichtung der Führungsklötze erfolgen.

Um während der Fahrt das Energieaufnahmevermögen der Sicherheitslenksäule auf die jeweiligen Fahr- bzw. Fahrerparameter anzupassen, sind die Führungsklötze in der Nut des Mantelrohrs bewegbar. Die Anpassung an die jeweilige Fahr- bzw. Fahrersituation kann in Intervallen erfolgen, d.h. dass nicht jede kurzfristige Änderung der erfassten Messwerte eine Regelung des Spanungsquerschnitts zur Folge hat.

Ein zwischen den Führungsklötzen angeordneter Elektromotor kann entsprechend den gemessenen Fahr- bzw. Fahrerparametern einen Steuerimpuls erhalten und den Abstand zwischen den Führungsklötzen beispielsweise über Gewindestangen verkleinern oder vergrößern, wodurch gleichzeitig die Spanungsbreite variiert wird, und so das Energieabsorptionsvermögen der Sicherheitslenksäule verändern.

Das durch die Schneidplatten zu bearbeitende Material kann als Zerspanschiene den Schneidplatten zur Verfügung gestellt werden. Das hat den Vorteil, dass das Material, beispielsweise Aluminium, der Zerspanschiene frei wählbar und unabhängig von den Werkstoffen der Sicherheitslenksäule ist. Selbstverständlich können auch alle anderen zur Zerspanung geeigneten Werkstoffe eingesetzt werden.

Je nach baulichen Gegebenheiten kann die Zerspanschiene fahrzeugfest an Führungsschienen befestigt sein, an denen das Mantelrohr fahrzeugfest gelagert ist. Somit lässt sich die notwendige Relativbewegung zwischen Mantelrohr und fahrzeugfester Lagerung in einfacher Art erreichen.

Um beim Einwirken der axialen Stoßwirkung einen Stoß auf die Schneiden, d.h. eine Blockade oder Beschädigung der Schneiden, zu verhindern, kann die Zerspanschiene mit einem Anschnitt versehen sein.

Weitere Vorteile sowie eine bevorzugte Ausführungsform werden im folgenden anhand der Zeichnung erläutert. Dabei zeigen:
- Fig. 1: eine perspektivische Darstellung eines Querschnitts durch eine Sicherheitslenksäule mit einem erfindungsgemäßen Energieabsorptionselement sowie
- Fig. 2: eine vergrößerte Darstellung eines Energieabsorptionselements gemäß Fig. 1.

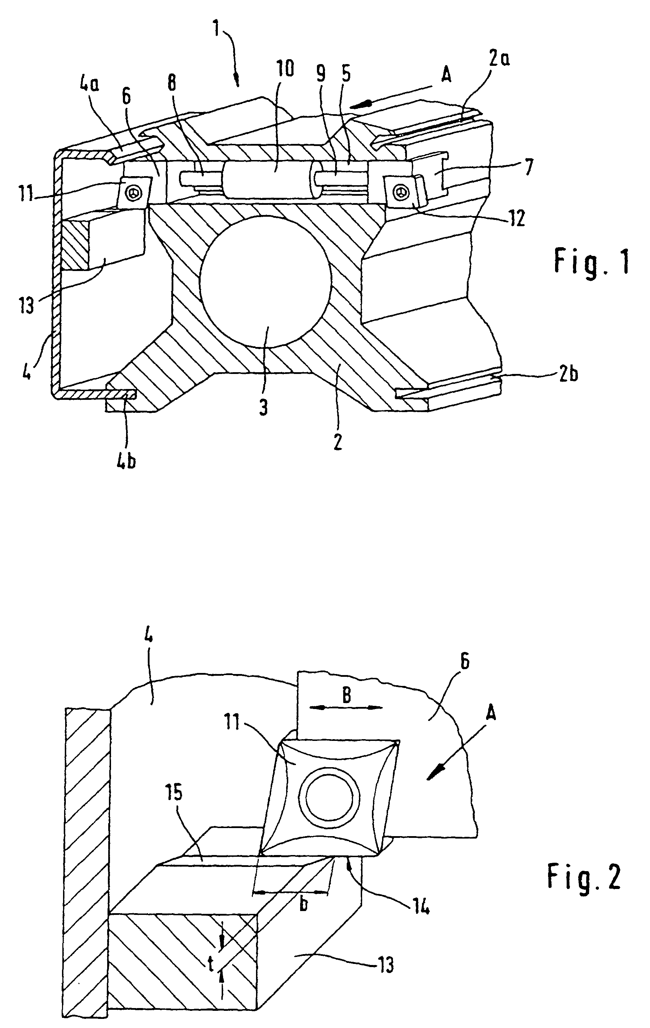

Fig. 1 zeigt eine Schnittdarstellung durch eine Sicherheitslenksäule 1 mit einem Mantelrohr 2. In dem Mantelrohr 2 ist eine zylindrische Aussparung 3 eingebracht, in der eine nicht dargestellte Lenkspindel konzentrisch zum Mantelrohr 2 verläuft und in diesem drehbar gelagert ist. Das Mantelrohr 2 ist für den normalen Betriebsfall an Führungsschienen 4 fahrzeugfest gelagert. Im Falle eines Aufpralls erhält das Mantelrohr 2 über die vom aufprallenden Fahrer beaufschlagte Lenkspindel einen Bewegungsimpuls gemäß Pfeil A, wobei die Bewegungsrichtung des Mantelrohrs 2 durch die Orientierung der Führungsschienen 4 vorgegeben wird. Die Führungsschienen 4 weisen einen u-förmigen Querschnitt auf und greifen mit ihren Enden 4a und 4b in korrespondierende Nuten 2a und 2b des Mantelrohrs 2 ein.

Für eine individuelle Anpassung der Energieaufnahme beim Zusammenschieben des Mantelrohrs im Falle eines Aufpralls ist quer zur axialen Erstreckung der Sicherheitslenksäule 1 eine Nut 5 eingebracht, in der spiegelsymmetrisch zur Mittelachse des Mantelrohrs 2 zwei Führungsklötze 6 und 7 verschiebbar angeordnet sind. Jeder Führungsklotz 6 bzw. 7 ist über eine Gewindestange 8 bzw. 9 mit einem ebenfalls in der Nut 5 angeordneten Elektromotor 10 verbunden. Der Elektromotor 10 wird über eine nicht dargestellte Steuer- und Regeleinheit angesteuert, die die Ist-Werte der Fahrt und/oder des Fahrers auswertet und entsprechende Signale zur Einstellung des Abstandes zwischen den zwei Führungsklötzen 6 und 7 liefert.

An jedem Führungsklotz 6 bzw. 7 ist eine Schneidplatte 11 bzw 12 befestigt, wobei jede Schneidplatte 11 bzw. 12 an einer ihr zugeordneten Zerspanschiene 13 anliegt. Aus Gründen der Übersichtlichkeit ist in Fig. 1 lediglich die Zerspanschiene 13 für die Schneidplatte 11 dargestellt.

Wie insbesondere aus der vergrößerten Darstellung der Schneidplatte 11 in Fig. 2 hervorgeht, liegt die Schneidplatte 11 mit ihrer Schneidkante 14 mit einer Spanungsbreite b an der Zerspanschiene 13 an. Um beim Aufprall eine Blockade zwischen den Schneidplatten 11 und der Zerspanschiene 13 zu vermeiden, ist die Zerspanschiene 13 mit einem Anschnitt 15 versehen.

Da der Führungsklotz 6 durch den Elektromotor 10 gemäß Pfeilrichtung B hin- und herbewegt werden kann, lässt sich eine breitere oder schmalere Überdeckung der Schneidkante 14 mit der Zerspanschiene 13 erreichen. Die dadurch folgende Änderung des Spanungsquerschnitts bewirkt eine Änderung der Gegenkraft, die der Schneidplatte 11 bei einem Vorlauf des Mantelrohrs 2 entgegenwirkt und somit eine Änderung der Energieabsorption des gesamten Systems. Denkbar ist neben der Anpassung der Energieaufnahme über die Einstellung der Spanungsbreite b auch eine Anpassung der Energieaufnahme über die Einstellung der Spanungstiefe t zum Beispiel durch eine schwenkbare oder höhenverstellbare Anordnung der Schneidplatten 6 und 7.

Über den Abstand der Schneidplatten 6 und 7 kann demnach das Crashverhalten der Sicherheitslenksäule in kurzen Intervallen auf die jeweilige Fahrsituation, z.B. Unfallgeschwindigkeit, Beschleunigungswerte oder Sitzeinstellung, oder den jeweiligen Fahrer, z.B. Gewicht oder Größe des Fahrers, angepasst werden.

Je nach Anforderung an die Sicherheitslenksäule können auf jeder Seite mehrere Schneidplatten über die Länge des Mantelrohrs angeordnet sein. Möglich ist auch, zwei weitere Schneidplatten auf der anderen Seite von der zylindrischen Aussparung 3 in einer zweiten Nut des Mantelrohrs unterzubringen.

Es bleibt dabei für die Erfindung unerheblich, ob die Zerspanelemente oder die Zerspanschiene mit dem Mantelrohr bewegt werden, d.h. es ist auch denkbar, die Zerspanelemente 11 und 12 an den Führungsschienen 4 und die Zerspanschiene 13 an dem Mantelrohr 2 zu befestigen und entsprechend zu regeln. Es ist sogar denkbar, auf die Zerspanschienen zu verzichten, um geeignete Kanten der Lenksäule, z.B. mit an den Führungsschienen befestigten Zerspanelementen ein aus z.B. Aluminium gefertigtes Mantelrohr mit geeigneter Zerspankante, zu zerspanen.

## Patentansprüche

1. Sicherheitslenksäule für ein Kraftfahrzeug, mit einem konzentrisch zu einer Lenkspindel angeordneten, an der Fahrzeugkarosserie befestigten Mantelrohr, das bei einer axialen Stoßeinwirkung unter Energieaufnahme verkürzbar ist und dabei mit zumindest einem Energieabsorptionselement zusammenwirkt, wobei das zumindest eine Energieabsorptionselement ein Zerspanelement (11, 12) ist, das bei einer durch die axiale Stoßeinwirkung hervorgerufenen Relativbewegung (A) des Mantelrohrs (2) gegenüber der Fahrzeugkarosserie (4) durch Zerspanen Energie abbaut.
**dadurch gekennzeichnet,**
**dass** ein durch jedes Zerspanelement (6, 7) zu bearbeitender Spanungsquerschnitt mit einer Anpassung der Energieaufnahme während der Fahrt in Abhängigkeit der aktuellen Fahr- und/oder Fahrerparameter einstellbar ist.

2. Sicherheitslenksäule nach Anspruch 1,
**dadurch gekennzeichnet,**
**dass** die Einstellung des Spanungsquerschnitts durch Änderung der Spanungsbreite b erfolgt.

3. Lenksäulenanordnung nach einem oder mehreren der Ansprüche 1 bis 2
**dadurch gekennzeichnet,**
**dass** zwei Zerspanelemente (11, 12) spiegelsymmetrisch an den Außenseiten des Mantelrohrs (2) angeordnet sind.

4. Lenksäulenanordnung nach einem oder mehreren der Ansprüche 1 bis 3,
**dadurch gekennzeichnet,**
**dass** die Zerspanelemente als Schneidplatte (11, 12) ausgebildet sind, wobei jede Schneidplatte (11, 12) jeweils an einem Führungsklotz (6, 7) befestigt ist.

5. Lenksäulenanordnung nach Anspruch 4,
**dadurch gekennzeichnet,**
**dass** die Führungsklötze (6, 7) in einer quer zur Mittelachse des Mantelrohrs (2) verlaufenden Nut (5) geführt sind.

6. Lenksäulenanordnung nach Anspruch 5,
**dadurch gekennzeichnet,**
**dass** die Führungsklötze (6, 7) in der Nut (5) des Mantelrohrs (2) bewegbar sind und somit die Spanungsbreite b für jede Schneidplatte (11, 12) einstellbar ist.

7. Lenksäulenanordnung nach Anspruch 6,
**dadurch gekennzeichnet,**
**dass** die Bewegung der Führungsklötze (6, 7) über einen mittig zwischen den Führungsklötzen (6, 7) angeordneten Elektromotor (10) erfolgt.

8. Lenksäulenanordnung nach Anspruch 7,
**dadurch gekennzeichnet,**
**dass** die Schneidplatten (11, 12) jeweils an einer als Schneidmaterial ausgebildeten Zerspanschiene (13) anliegen.

9. Lenksäulenanordnung nach Anspruch 8,
**dadurch gekennzeichnet,**
**dass** die Zerspanschiene (13) an fahrzeugfest gelagerten Führungsschienen (4) befestigt ist, über die die Befestigung des Mantelrohrs (2) an der Fahrzeugkarosserie erfolgt.

10. Lenksäulenanordnung nach Anspruch 8 oder 9 ,
**dadurch gekennzeichnet,**
**dass** die Zerspanschiene (13) einen Anschnitt (15) aufweist.

## Claims

1. Safety steering column for a motor vehicle, with a casing tube fixed to the vehicle bodywork and disposed concentrically with a steering spindle, which absorbs energy as it shortens in the event of an axial impact and does so in co-operation with at least one energy-absorbing element, the at least one energy-absorbing element being a cutting element (11, 12) which absorbs energy by cutting in the event of a relative movement (A) of the casing tube (2) with respect to the vehicle bodywork (4) caused by an axial impact,
**characterised in that**
a cross-section of the cut to be made by each cutting element (6, 7) can be adjusted during driving, thus adjusting the energy absorbed, depending on the instantaneous driving and/or driver parameters.

2. Safety steering column as claimed in claim 1,
**characterised in that**
the cross-section of the cut is adjusted by varying the cutting width b.

3. Safety steering arrangement as claimed in one or more of claims 1 to 2,
**characterised in that**
two cutting elements (11, 12) are disposed symmetrically in mirror image on the external faces of the casing tube (2).

4. Steering column arrangement as claimed in one or more of claims 1 to 3,
**characterised in that**
the cutting elements are provided in the form of cutting plates (11, 12), each cutting plate (11, 12) being secured respectively to a guide block (6, 7).

5. Steering column arrangement as claimed in claim 4,
**characterised in that**
the guide blocks (6, 7) are guided in a groove (5) extending transversely to the mid-axis of the casing tube (2).

6. Steering column arrangement as claimed in claim 5,
**characterised in that**
the guide blocks (6, 7) are displaceable in the groove (5) of the casing tube (2), thereby enabling the cutting width b to be adjusted for each cutting plate (11, 12).

7. Steering column arrangement as claimed in claim 6,
**characterised in that**
the guide blocks (6, 7) are displaced by means of an electric motor (10) centrally disposed between the guide blocks (6, 7).

8. Steering column arrangement as claimed in claim 7,
**characterised in that**
the cutting plates (11, 12) each lie adjacent to a cutting rail (13) provided as the material to be cut.

9. Steering column arrangement as claimed in claim 8,
**characterised in that**
the cutting rail (13) is secured to guide tracks (4) fixedly mounted on the vehicle, by means of which the casing tube (2) is secured to the vehicle bodywork.

10. Steering column arrangement as claimed in claim 8 or 9,
**characterised in that**
the cutting rail (13) has a chamfer edge (15).

## Revendications

1. Colonne de direction de sécurité pour un véhicule automobile, comprenant un tube d'enveloppe disposé de façon concentrique par rapport à un arbre de direction et fixé sur la carrosserie du véhicule, qui peut être raccourci sous l'effet d'un choc axial avec absorption d'énergie et agit conjointement avec au moins un élément d'absorption d'énergie, le au moins un élément d'absorption d'énergie étant un élément à coupe rapide (11, 12), lequel disparaît du fait de l'énergie de coupe, lors d'un déplacement relatif (A), causé par l'effet de choc axial, du tube d'enveloppe (2) par rapport à la carrosserie du véhicule (4), **caractérisé en ce qu'**une section transversale de coupe à traiter par chaque élément à coupe rapide (11, 12) peut être réglée avec une adaptation de l'absorption d'énergie pendant le trajet en fonction des paramètres actuels de conduite et/ou du conducteur.

2. Colonne de direction de sécurité selon la revendication 1, **caractérisé en ce que** le réglage de la section transversale de coupe s'effectue par variation de la largeur d'usinage b.

3. Dispositif de colonne de direction selon l'une quelconque ou plusieurs des revendications 1 à 2, **caractérisé en ce que** deux éléments à coupe rapide (11, 12) sont disposés de façon symétrique sur les côtés extérieurs du tube d'enveloppe (2).

4. Dispositif de colonne de direction selon l'une quelconque ou plusieurs des revendications 1 à 3, **caractérisé en ce que** les éléments à coupe rapide sont conçus comme une plaque de coupe (11, 12), chaque plaque de coupe (11, 12) étant fixée respectivement sur un bloc de guidage (6, 7).

5. Dispositif de colonne de direction selon la revendication 4, **caractérisé en ce que** les blocs de guidage (6, 7) sont guidés dans une rainure (5) agencée transversalement à l'axe central du tube d'enveloppe (2).

6. Dispositif de colonne de direction selon la revendication 5, **caractérisé en ce que** les blocs de guidage (6, 7) peuvent être déplacés dans la rainure (5) du tube d'enveloppe (2) et donc la largeur d'usinage b peut être réglée pour chaque plaque de coupe (11, 12).

7. Dispositif de colonne de direction selon la revendication 6, **caractérisé en ce que** le déplacement des blocs de guidage (6, 7) s'effectue au moyen d'un moteur électrique (10) disposé au centre entre les blocs de guidage (6, 7).

8. Dispositif de colonne de direction selon la revendication 7, **caractérisé en ce que** les plaques de coupe (11, 12) s'appuient respectivement sur un rail de coupe rapide (13) conçu comme matériau de coupe.

9. Dispositif de colonne de direction selon la revendication 8, **caractérisé en ce que** le rail de coupe rapide (13) est fixé sur des rails de guidage (4) logés de façon solidaire au véhicule, par lesquels s'effectue la fixation du tube d'enveloppe (2) sur la carrosserie du véhicule.

10. Dispositif de colonne de direction selon la revendication 8 ou 9, **caractérisé en ce que** le rail de coupe rapide (13) présente un chanfrein d'entrée.
